# EUROPEAN PATENT APPLICATION

(11) **EP 1 833 254 A1**
(43) Date of publication of application: **12.09.2007**
(21) Application number: 05822815.6
(22) Date of filing: 27.12.2005
(51) Int. Cl.: H04N 7/173, H04N 5/44

(54) **TELEVISION BROADCAST VIEWING SYSTEM AND TELEVISION BROADCAST VIEWING METHOD**

(30) Priority: 28.12.2004 JP 2004381506
(71) Applicant: Softbank BB Corp., Tokyo 105-7304 (JP)
(72) Inventor: KAMETA, Hayato, Minato-ku, Tokyo 105-7304 (JP)
(74) Representative: Grünecker, Kinkeldey, Stockmair & Schwanhäusser Anwaltssozietät
(86) International application number: PCT/JP2005/023926
(87) International publication number: WO 2006/077728

(57) **Abstract**

There is provided a television broadcast viewing system for viewing/listening video and audio by a terminal device 1 having a monitor 1a. The system includes a television tuner unit 11 for receiving a broadcast content broadcasted via a radio wave, a net content acquisition unit 14 for acquiring a net content distributed via an IP network 4, a CM detection unit 12 for detecting a CM portion in the broadcast content being viewed, a channel management unit 13 for allocating a net content to the television channel to which no television broadcast frequency is allocated during detection of CM, and a synthesis output unit 18 for outputting a broadcast content allocated to the selected television channel or a net content by the monitor 1a. Thus, it is possible to view meaningful information which can be viewed during CM time and reduce the channel switching frequency accompanying zapping.

## Description

### Technical Field

The present invention relates to a television broadcast viewing system and a television broadcast viewing method for integrating and outputting broadcast content, which is distributed via radio waves such as ground wave broadcasting or satellite broadcasting, and network content, which is distributed through an IP network such as the Internet. broadcast is viewed

### Background Art

In the prior art, a ground wave broadcast, a satellite broadcast or the like is viewed and listened by receiving broadcast radio waves with a dedicated receiver and outputting pictures and sounds. On the other hand, with the advent of the Internet technology, it becomes possible to browse Web sites through the Internet and deliver image content by streaming.

Incidentally, since the above broadcast content is delivered by radio waves which are broadcasted in a unilateral way from broadcast stations, the broadcast content can only passively be viewed and listened on the receiver side. Contrary to this, in the case of the content delivered through the Internet, it is possible to provide a variety of services through bidirectional communications.

Taking into consideration the above circumstances, so far, it has been proposed that a television video signal provided from a wired television broadcast network such as a cable television is put (superimposed) on delivery data delivered through the Internet from the wired television broadcast network for displaying the superimposed picture (for example, refer to Patent Document 1).

However, conventionally, users tend to switch to another channel when CM is broadcasted during a program, as the so-called zapping viewing, and there is a problem of the similar tendency also in the system for viewing and listening the television broadcast and the Internet delivery together by superimposition as described above.

In accordance with this zapping viewing, while the user is viewing a channel, he wants to view another channel in many cases only for the CM broadcasting time slot of the channel that is currently viewed, and thereby the user has to continue viewing this another channel, while checking whether or not the CM of the currently viewed channel ends. The user is therefore forced to switch between the currently viewed channel and this another channel at frequent intervals. The Patent Document 1: Japanese Patent Published Application No. 2002-171458.

### Summary of The Invention

Accordingly, taking into consideration the above circumstances, it is an object of the present invention to provide a television broadcast viewing system and a television broadcast viewing method in which a program linked with a CM broadcast in a viewed program is distributed through an IP network in order to make it possible to view noticeable information which can be viewed during the CM time slot, and reduce the channel switching frequency during zapping.

In order to accomplish the object as described above, according to the present invention, when viewing and listening video and sound by a terminal device provided with a display unit, broadcast content which is broadcasted through radio waves is received while network content which is distributed through an IP network is acquired, and while detecting a CM portion in the broadcast content which is being viewed, the network content is assigned to a television channel to which no television broadcast frequency is assigned during the time that a CM is detected by the CM detection unit, outputting on the display unit the broadcast content or network content assigned to the television channel which is selected.

In accordance with the present invention as described above, it is possible to distribute noticeable information having a time length which can be viewed during the CM time slot on the television channel, to which no television broadcast frequency is assigned, in correspondence with the CM broadcasting time slot of the current television broadcast, and to reduce the frequency of switching because of zapping viewing.

It is preferred in the above invention that network content is assigned to the television channel just adjacent to the television channel on which a CM is detected. In this case, it is possible to view the noticeable information as described above only by shifting the channel by one, and furthermore reduce the frequency of switching.

It is preferred in the above invention that, while the time of viewing a channel is measured, zapping viewing is determined when the time of viewing is shorter than a predetermined time length, and a CM is detected on the television channel when zapping viewing is not determined, and the network content is assigned in correspondence with a CM broadcasting time slot of the current channel. In this case, while the time of viewing a channel is measured to determine whether or not it is zapping viewing, the channel is determined as a main channel if the viewing time is longer than a predetermined time, and it is possible to deliver the above noticeable information in an appropriate time slot of the main channel when a CM is broadcasted on the main channel, and prevent noticeable information from being delivered at an inappropriate timing corresponding to a CM which is broadcasted on the channel switched during zapping.

On the other hand, in accordance with the second invention, when viewing and listening video and sound by a terminal device provided with a display unit, the network content is requested through the IP network, network content which is distributed in response to said request is acquired, said network content is output on said display unit, and user's viewing manipulation information of said network content is acquired through a viewing manipulation acquisition unit. The viewing manipulation information is collected from a plurality of said terminal devices by a collection evaluation unit, which evaluates the values of said network content.

In accordance with the invention as described above, since the interest and preference of the user is reflected in the manipulation performed by the user during viewing content, it is possible to accurately evaluate the value of content by acquiring the manipulation information.

The collection evaluation unit of the present invention acquires the points of changing the playback direction and playback speed of said network content, for example, corresponding to starting, stopping, fast-forwarding, rewinding and the like operation of the playback of said network content as said viewing manipulation information, and calculate the distribution of said changing points in order to perform said value evaluation.

As has been discussed above, by collecting the points of changing the playback direction and playback speed of network content and calculates the distribution thereof, it is possible to realize detailed content evaluation in which, for example, the portion repeatedly viewed by rewinding is evaluated as a high value portion while the portion insufficiently viewed by fast-forwarding is evaluated as a low value portion.

### Brief Description Of The Drawings

[Fig. 1] A block diagram for showing the overall configuration of a television broadcast viewing system in accordance with a first embodiment.
[Fig. 2] A view for explaining the assignment of a CM time length network program to a television channel in accordance with the first embodiment.
[Fig. 3] A flow chart for showing the operation of the television broadcast viewing system in accordance with the first embodiment.
[Fig. 4] (a) is a block diagram for showing the configuration of the channel management unit 13 of a television broadcast viewing system in accordance with a second embodiment, and (b) is a flow chart for showing the operation of the television broadcast viewing system in accordance with the second embodiment.
[Fig. 5] A view for explaining the assignment of a CM time length network program to a television channel in accordance with the second embodiment.
[Fig. 6] (a) is a block diagram showing the internal configuration of a content server in accordance with the second embodiment, and (b) is a flow chart for showing the procedure of the quiz program viewing method in accordance with the second embodiment.
[Fig. 7] A block diagram for showing the configuration of the content server 5 in accordance with the second embodiment for distributing the viewing rate report program.
[Fig. 8] A flow chart for showing the procedure of the method of viewing the viewing rate report program in accordance with the second embodiment.
[Fig. 9] A view for explaining the structure of a report content 211 in accordance with the second embodiment.
[Fig. 10] A view for explaining the operation of a pop-up window in accordance with the second embodiment.
[Fig. 11] A block diagram for showing the structure of the channel management unit 13 of a television broadcast viewing system in accordance with a third embodiment.
[Fig. 12] A block diagram showing the internal configuration of a content server in accordance with the third embodiment.
[Fig. 13] A view for explaining the content evaluating method in accordance with the third embodiment.
[Fig. 14] A block diagram showing the internal configuration of a content server in accordance with an exemplary modification of the third embodiment.
[Fig. 15] A time chart of the operation of a server switching unit 51a in accordance with the exemplary modification of the third embodiment.

### Best Mode for Carrying Out the Invention

### [First Embodiment]

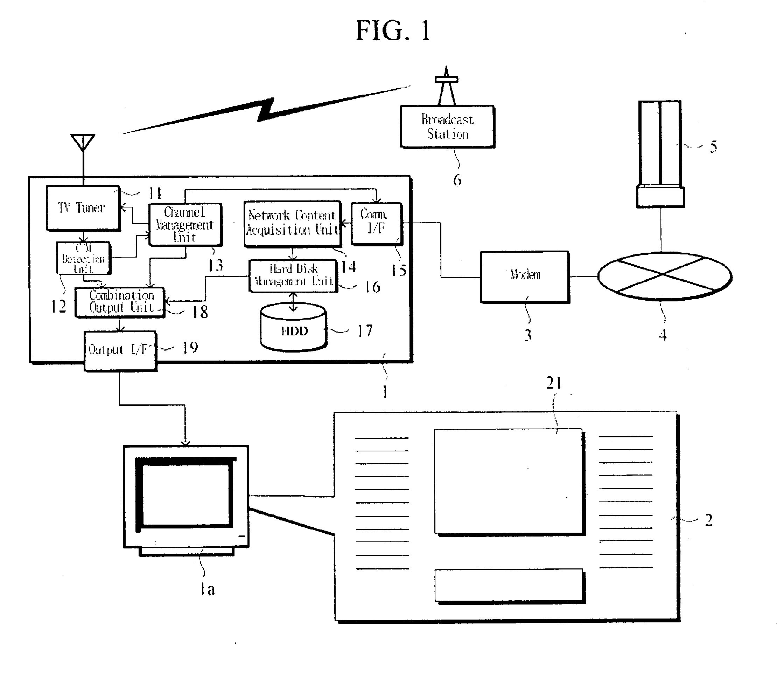

(Overall Configuration of Television Broadcast Viewing System) The first embodiment of the present invention will be explained with reference to the accompanying drawings. Fig. 1 is a block diagram for showing the overall configuration of the television broadcast viewing system in accordance with the present embodiment.

As shown in the same figure, the television broadcast viewing system of the present embodiment is generally composed of a terminal device 1 provided with a monitor 1a, a terminal equipment 3 to be connected with an IP network 4, a broadcast station 6 serving to broadcast via radio waves, a content server 5 located in the IP network 4.

The IP network 4 is a distributed communication network which is constructed by connecting a variety of communication lines (a telephone line, an ISDN line, a public network such as an ADSL line, a dedicated communication line, and a radio communication network) to each other by the use of the communication protocol TCP/IP. This IP network 4 may be a LAN such as an intranet (a network within a company) based on 10BASE-T, 100BASE-TX or the like.

The terminal equipment 3 is an equipment for connecting the terminal device 1 with the IP network 4, and includes a modulator demodulator device such as a modem for converting digital data into a voice signal and vice versa when connecting a telephone line, a signal conversion device such as an ADSL modem for converting an ADSL signal into a LAN signal and vice versa when connecting an ADSL line, a DSU and a terminal adapter which are required for connecting an ISDN line, and so forth.

The content server 5 is a server computer or software capable of transmitting network content such as HTML (HyperText Markup Language) files, image files, music files and the like as WWW (World Wide Web) documents, and serves to accumulate information such as HTML files and image files and transmit the information in response to a request from client software through the IP network 4 such as the Internet.

### (Terminal Device 1)

The terminal device 1 is an arithmetic operation unit provided with a CPU and can be implemented by a general purpose computer, for example, a personal computer, or a set-top box having specific capabilities. The monitor 1a is a display device such as a liquid crystal display, a CRT display, a plasma display or the like, and connected with the terminal device 1 through the output interface 19 in order to output videos and sounds. Incidentally, this monitor 1a may be a television receiver in the case where the terminal device 1 is a set-top box.

More specifically speaking, the terminal device 1 is provided with a television tuner unit 11 with which broadcast content can be received via radio waves, a CM detection unit 12 for detecting a CM broadcast in the broadcast content, which is viewed, a network content acquisition unit 14 for acquiring network content, which is distributed through the IP network 4, by a communication interface 15, a channel management unit 13 for controlling the channel to be viewed, a combination output unit 18 for switchingly outputting the network content and the broadcast content to the monitor 1a, a hard disk management unit 16 for recording the network content and the broadcast content, and a hard disk drive 17.

The television tuner unit 11 is a circuit for providing a so-called tuner function capable of receiving broadcast signals, modulating these reception radio wave signals, converting these signals into predetermined digital signals, and outputting the predetermined digital signals, and makes it possible to receive the broadcast content on either channel of ground wave broadcasts, satellite broadcasts, cable TV broadcasts, radio broadcasts and the like by changing the frequency. The frequency which is received by this television tuner unit 11 is changed by a control signal which is output from the channel management unit 13 on the basis of user manipulation. Also, the received signal of this television tuner unit 11 is output to the combination output unit 18, and also can be recorded in the hard disk by the hard disk management unit 16.

Incidentally, while the television tuner unit 11 receives radio waves through an antenna which is incorporated in (or attached to) the circuit, it is also possible for example to provide a television antenna connection terminal so that the television tuner unit 11 receives broadcast signals through a coaxial cable and the like which connects it with another antenna. Also, in the case of the present embodiment, this television tuner unit 11 is implemented as a circuit which is fixedly incorporated within the terminal device 1. However, it can be replaced with an adapter device which is provided with an interface in conformity with a data transmission standard such as USB and detachably attached to a USB interface (USB terminal) of the terminal device 1.

The channel management unit 13 is a module for determining to which television channel the broadcast content received through the television tuner unit 11 and the network content acquired by the network content acquisition unit 14 are assigned, receiving user manipulation of a remote control and the like, sending a delivery request to the content server 5 for the content corresponding to the channel selected by the user, and outputting the network content acquired by the network content acquisition unit 14 through the combination output unit 18 in response to this request.

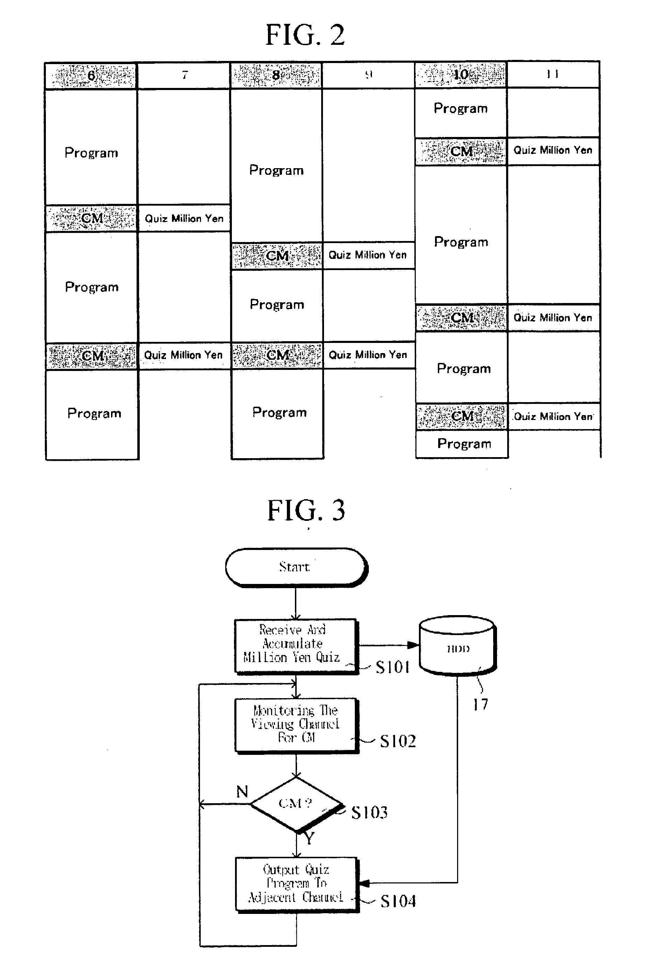

In particular, the channel management unit 13 is provided with the functionality of assigning, to the television channel to which no television broadcast frequency is assigned, to a noticeable piece of content among network content (hereinafter referred to as "CM time length network program") such as million yen quiz which can be viewed during the CM time, while the CM detection unit 12 is detecting a CM. In the case of the present embodiment, as shown in Fig. 2, the channel to which this CM time length network program is assigned is a television channel which is adjacent to the television channel on which a CM is detected.

The CM detection unit 12 is a module for detecting the CM portion (start and end) of the broadcast content. As a method of detecting a CM by this CM detection unit 12 among a variety of similar methods, it is thought to monitor the sound volume and luminance value of broadcast content and determine the start and end of the CM when these values significantly vary. Meanwhile, another example of CM detecting methods is such that a CM is detected by installing a server in the IP network 4 for distributing the data indicative of the start and end times of the respective CMs of each channel, and detecting a CM in accordance with the report from this server.

The network content acquisition unit 14 is a module for receiving network content such as motion picture delivery and HTML files as described above through the terminal equipment 3 by the use of a communication protocol such as TCP/IP, and caching the data as received for buffering. The communication interface 15 is an interface for communicating with the terminal equipment 3, and implemented as a wireless interface such as a LAN card in conformity with a wireless LAN standard such as IEEE802.11b.

In the case of the present embodiment, the combination output unit 18 is provided with the functionality of invoking and running browser software which is run in the terminal device 1, and the browser software downloads HTML (HyperText Markup Language) files, image files, music files and the like delivered from the content server 5 located on the IP network 4, parses the layout to display and play back them, browses a Web page 2, and combines and outputs broadcast content and network content (images and motion pictures) within the Web page. More specifically speaking, the tab included in a Web page (HTML file) delivered by the content server 5 are parsed to produce the television screen 21, in which images and motion pictures (broadcast content or network content) are inserted, and combine a video or the like in this screen.

In addition to this, the combination output unit 18 is provided with the functionality of outputting broadcast content or network content assigned to the television channel selected by the user manipulation through the monitor 1a on the basis of a switching control signal acquired from the channel management unit 13.

### (Television Broadcast Viewing Method)

The television broadcast viewing method in accordance with the present invention can be carried out by operating the television broadcast viewing system having the structure as described above. Fig. 3 is a flow chart for showing the operation of the television broadcast viewing system in accordance with the present embodiment.

First, while the television tuner unit 11 receives broadcast content which is broadcasted by the broadcast station 6, the network content acquisition unit 14 receives network content (the WEB page 2 and the CM time length network program) from the content server 5 in step S101. The broadcast content is received by the television tuner unit 11, converted into a predetermined digital signal, and then output to the combination output unit 18 and the hard disk management unit 16, and the converted content can be stored in the hard disk drive 17. On the other hand, the network content is received by the network content acquisition unit 14 and accumulated in the hard disk drive 17, while the network content is transmitted to the browser software of the combination output unit 18.

Then, in the combination output unit 18, the broadcast content or network content is combined with the Web page by the browser software, and output. At this time, the CM detection unit 12 monitors the broadcast content for a CM portion in step S102 in order to determine whether or not a CM is broadcasted on the viewing channel in step S103. If no CM is broadcasted, monitoring is continued as it is. On the other hand, when it is determined that a CM is broadcasted in step S103, the CM time length network program (million yen quiz) is assigned in step S104 to the television channel (channel 7, 9, 11.. in Fig. 2) to which no television broadcast frequency is assigned during the time that the CM is detected by the CM detection unit 12, such that this program can be viewed with the monitor 1a by user's switching manipulation.

Incidentally, while the CM time length network program is assigned to the time when the CM is detected in the case of the present embodiment, it is possible for example to assign valuable short content such as a high-light scene, a digest story or the like of a network content program.

In accordance with the present embodiment as has been discussed above, it is possible to distribute noticeable information having a time length which can be viewed during the CM time slot on the television channel, to which no television broadcast frequency is assigned, in correspondence with the CM broadcasting time slot of the current television broadcast, and to reduce the frequency of switching because of zapping viewing. Particularly, in the case of the present embodiment, since network content is assigned to the television channel just adjacent to the television channel on which a CM is detected, it is possible to view the noticeable information as described above only by shifting the channel by one, and furthermore reduce the frequency of switching.

### [Second Embodiment]

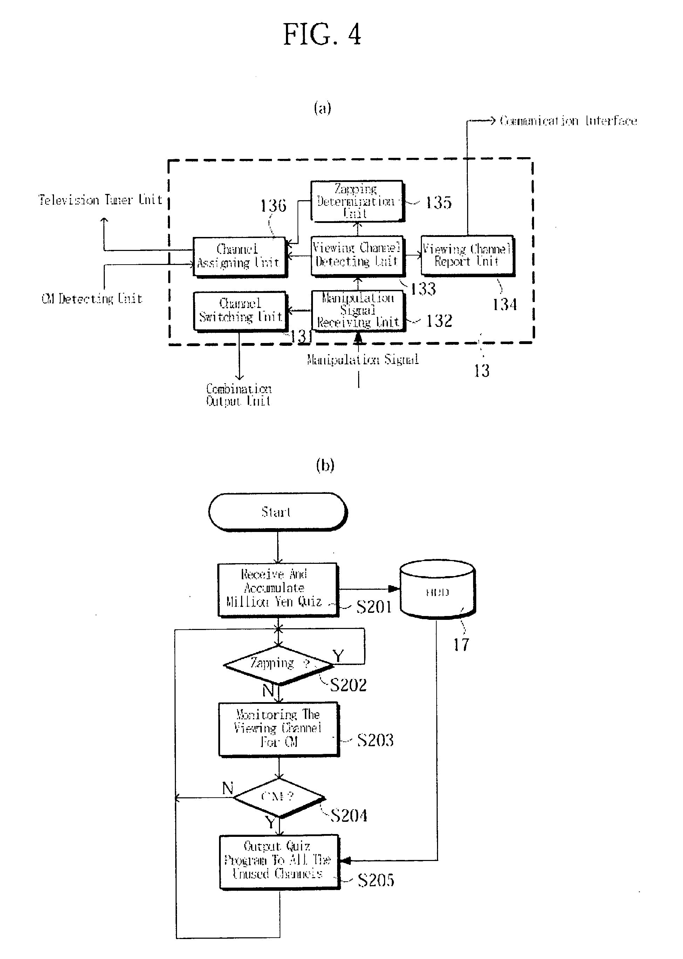

Next, the second embodiment of the present invention will be explained. The present embodiment is characterized in that the channel management unit 13 as described above is provided with a zapping function, a quiz award system and the like. Fig. 4 (a) is a block diagram for showing the configuration of the channel management unit 13 of the television broadcast viewing system in accordance with the present embodiment.

### (Configuration Of Channel Management Unit 13)

As shown in the same figure, the channel management unit 13 in accordance with the first embodiment as described above is provided with a channel switching unit 131, a manipulation signal receiving unit 132, a viewing channel detecting unit 133, a zapping determination unit 135, a channel assigning unit 136, and a viewing channel report unit 134.

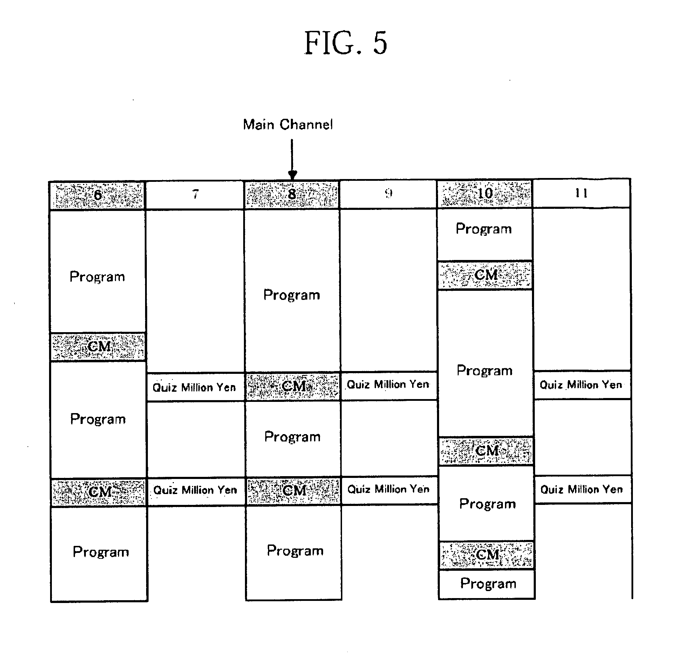

The channel assigning unit 136 is a module for determining to which television channel the broadcast content received by the television tuner unit 11 and the network content acquired by the network content acquisition unit 14 are assigned. Particularly, this channel assigning unit 136 is provided with the functionality of assigning the television channel, to which no television broadcast frequency is assigned, to the CM time length network program such as million yen quiz while the CM detection unit 12 is detecting a CM. Particularly, in the case of the present embodiment, the assignment to this channel is performed as shown in Fig. 5 such that the same CM time length network program is assigned to the television channel, to which no television broadcast frequency is assigned, in correspondence with the CM broadcasting time slot of the current channel.

The manipulation signal receiving unit 132 is a module for receiving the manipulation signals from manipulation devices a remote control, channel buttons, a mouse, a keyboard and the like, and outputting the manipulation signals to the viewing channel detecting unit 133. The viewing channel detecting unit 133 is a module for detecting which channel is displayed on the monitor 1a on the basis of the manipulation signal which is received by the manipulation signal receiving unit 132. The viewing channel as detected is output to the channel switching unit 131 for controlling the combination output of the combination output unit 18, and output to the viewing channel report unit 134 which sends the viewing channel as a delivery request to the content server 5 through the communication interface 15. Furthermore, the detection result by the viewing channel report unit 134 is output to the zapping determination unit 135 for use in the zapping detection.

The zapping determination unit 135 measures the time of viewing the same television channel, and determines the channel as a main channel (viewing channel) if the viewing time is longer than a predetermined time, while the current viewing is determined as zapping viewing if the viewing time is no longer than a predetermined time. This zapping detection result is output to the CM detection unit 12. When it is determined that the current viewing is not zapping viewing, the CM detection unit 12 performs detection of a CM on the current television channel. By this process, while ignoring a CM broadcast as it happens during zapping, a CM broadcast is detected only during viewing a main channel (viewing channel) which has been viewed for the predetermined time or longer.

### (Television Broadcast Viewing Method)

Then, the television broadcast viewing method in accordance with the present embodiment is performed by the procedure as shown in Fig. 4(b).

First, the television tuner unit 11 receives broadcast content which is broadcasted from the broadcast station 6, the channel management unit 13 transmits a delivery request to the content server 5, and the network content acquisition unit 14 acquires network content (the Web page 2 and the CM time length network program) from the content server 5 in step S201. The broadcast content is received by the television tuner unit 11, converted into a predetermined digital signal, and then output to the combination output unit 18 and the hard disk management unit 16, and the converted content can be stored in the hard disk drive 17. On the other hand, the network content is received by the network content acquisition unit 14 and accumulated in the hard disk drive 17, while the network content is transmitted to the browser software of the combination output unit 18. In the combination output unit 18, the broadcast content or network content is combined with the Web page by the browser software, and output.

Then, the zapping determination unit 135 measures the time of viewing the same television channel, and determines whether or not it is zapping viewing in step S202. Namely, if the viewing time is longer than a predetermined time, it is determined that the current viewing is not zapping viewing (i.e., the "N" branch from step S202), and monitoring the current television channel for a CM is started in step S203.

In step S204, the CM detection unit 12 determines whether or not a CM is broadcasted on the viewing channel. If no CM is broadcasted, monitoring is continued. On the other hand, if it is determined that a CM is broadcasted in step S204, the CM time length network program ("million yen quiz") is assigned in step S205 to the television channel (channel 7, 9, 11.. in Fig. 5) to which no television broadcast frequency is assigned during the time that the CM is detected by the CM detection unit 12, such that this program can be viewed with the monitor 1a by user's switching manipulation.

By this process, only when the main channel really viewed by the user is switched to another channel, zapping is determined to start outputting the CM time length network program, but when a zapping channel is switched to a further channel, the CM time length network program is not output.

### (Quiz Program Viewing Method)

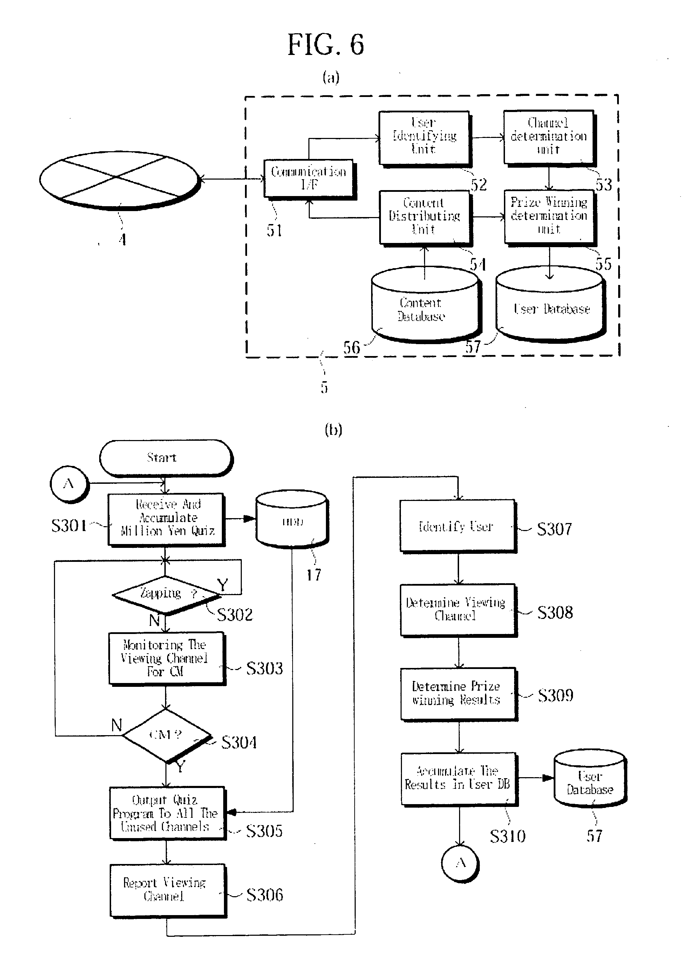

Furthermore, in the case of the present embodiment, it is possible to implement the system of handling answers to a quiz program and processing prize winning by the use of the viewing channel report unit 134 as described above. Fig. 6(a) is a block diagram for showing the internal configuration of the content server 5 in accordance with the present embodiment.

As shown in the same figure, the content server 5 is provided with a communication interface 51 for connecting the IP network 4, a user identifying unit 52 for identifying the accessing user, a channel determination unit 53 for determining the channel the user views, a content distributing unit 54 and a content database 56 for distributing the CM time length network program such as million yen quiz, a prize winning determination unit 55 for acquiring a correct number of the quiz program, which is distributed, and determining whether correct or wrong answer is returned in response to the quiz program on the basis of the match between it and the channel number the user views, and a user database 57 for managing the prize winning results of the respective users.

The communication interface 51 is a communication device for connecting the IP network 4, and serves to the transmission and reception between the terminal device 1 of each user and the terminal device 1 by transmission and reception of packet data.

The user identifying unit 52 is a module for acquiring the IP address of a user and a user identifier such as a user ID from the terminal device 1 for identifying the user. The channel determination unit 53 is a module for identifying the channel the user views with reference to the viewing channel which is reported from the viewing channel report unit 134 of the terminal device 1 of each user.

The prize winning determination unit 55 is a module for comparing a correct number of the quiz program, which is distributed from the content distributing unit 54, and the channel number the user views to determine a match or mismatch therebetween, determining a correct answer if there is a match or a wrong answer if there is a mismatch, and accumulating the results of the correct or wrong answers in the user database 57 in association with the user identifiers.

The quiz program viewing method as described above is performed by the following steps. Fig. 6 (b) is a flow chart for showing the procedure of the quiz program viewing method in accordance with the present embodiment.

First, as shown in the same figure, while the television tuner unit 11 receives broadcast content which is broadcasted by the broadcast station 6, the network content acquisition unit 14 receives network content (the WEB page 2 and the CM time length network program) from the content server 5 in step S301. The broadcast content is received by the television tuner unit 11, converted into a predetermined digital signal, and then output to the combination output unit 18 and the hard disk management unit 16, and the converted content can be stored in the hard disk drive 17. On the other hand, the network content is received by the network content acquisition unit 14 and accumulated in the hard disk drive 17, while the network content is transmitted to the browser software of the combination output unit 18. In the combination output unit 18, the broadcast content or network content is combined with the Web page by the browser software, and output.

Then, the zapping determination unit 135 measures the time of viewing the same television channel, and determines whether or not it is zapping viewing in step S302. Namely, if the viewing time is longer than a predetermined time, it is determined that the current viewing is not zapping viewing (i.e., the "N" branch from step S302), and monitoring the current television channel for a CM is started in step S303.

In step S304, the CM detection unit 12 determines whether or not a CM is broadcasted on the viewing channel. If no CM is broadcasted, monitoring is continued. On the other hand, if it is determined that a CM is broadcasted in step S304, the CM time length network program ("million yen quiz") is assigned in step S305 to all the unused television channels (channel 7, 9, 11.. in Fig. 5) to which no television broadcast frequency is assigned during the time that the CM is detected by the CM detection unit 12, such that this program can be viewed with the monitor 1a by user's switching manipulation.

In this "million yen quiz", alternative questions are asked one quiz per 15 to 30 seconds, and the answer number corresponds to the television channel (unused channels 7, 9, 11.. in Fig. 5) to which no television broadcast frequency is assigned. The user who wants to answer the quiz switches the channel to one of these unused channels 7, 9, 11.. corresponding to the correct answer he believes. The switched channel is reported to the content server 5 by the viewing channel report unit 134 in step S306.

The content server 5 identifies the user by the user identifying unit 52 in step S307, and the channel determination unit 53 determines the channel number as the answer of the user in step S308. Next, the prize winning determination unit 55 compares the correct number of the quiz which is being asked and the channel number to which the user switches the channel to determine whether a match or mismatch therebetween and whether correct or wrong the answer is in step S309, and accumulates the prize winning results in the user database 57 in step S310. Thereafter, returning to step S301, if the CM time slot continues yet, the next question is asked, but if the CM time slot ends, the CM time length network program ends.

Then, the percentage of correct answers and the like are calculated with reference to the prize winning results, such that for example high scorers are awarded prizes, which are dispatched, or services of cash back corresponding to viewing fees or the like, extra points or other services.

In accordance with the quiz program viewing method as discussed above, the user can enjoy a quiz by the use of the CM time slot and reduce the frequency of useless zapping.
Particularly, in the case of the present embodiment, while the time of viewing a channel is measured to determine whether or not it is zapping viewing, the channel is determined as a main channel if the viewing time is longer than a predetermined time, and it is possible to broadcast the CM time length network program in an appropriate time slot of the main channel when a CM is broadcasted on the main channel, and prevent noticeable information from being delivered at an inappropriate timing corresponding to a CM which is broadcasted on the channel switched during zapping.

### (Viewing Rate Report Program)

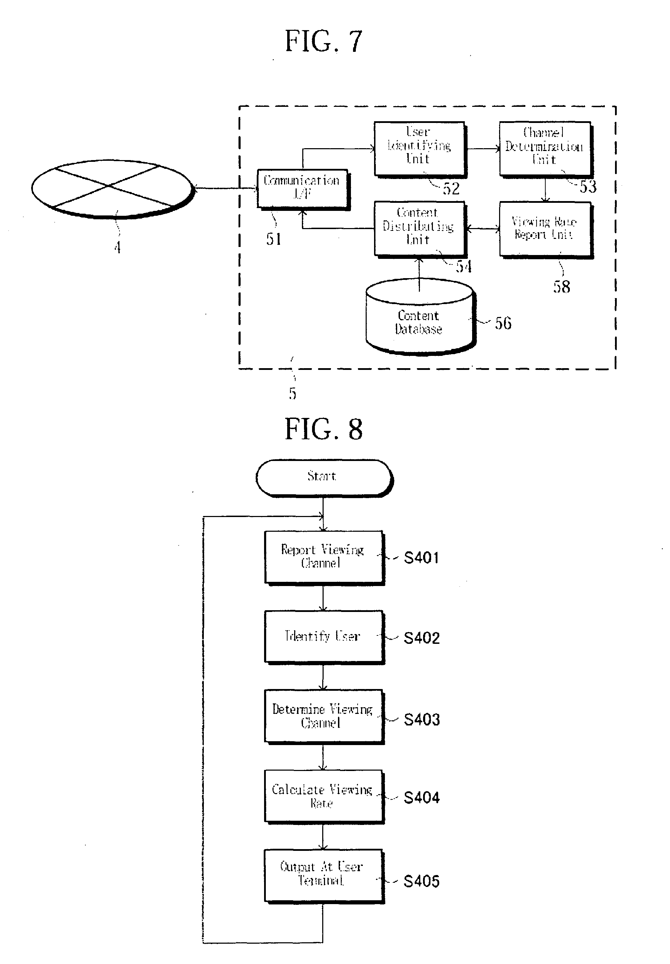

In addition to this, the present embodiment makes it possible to implement a system for performing distribution of a viewing rate report program by the use of the viewing channel report unit 134 as described above. Fig. 7 is a block diagram for showing the configuration of the content server 5 in accordance with the present embodiment for distributing the viewing rate report program.

As shown in the same figure, the content server 5 is provided with a content distributing unit 54 and a content database 56 for distributing the viewing rate information program, and an viewing rate report unit 58 for calculating a viewing rate on a real time base and generating report content, in addition to the communication interface 51 for connecting the IP network 4, the user identifying unit 52 for identifying the accessing user, and the channel determination unit 53 for determining the channel the user currently views, as has been discussed above.

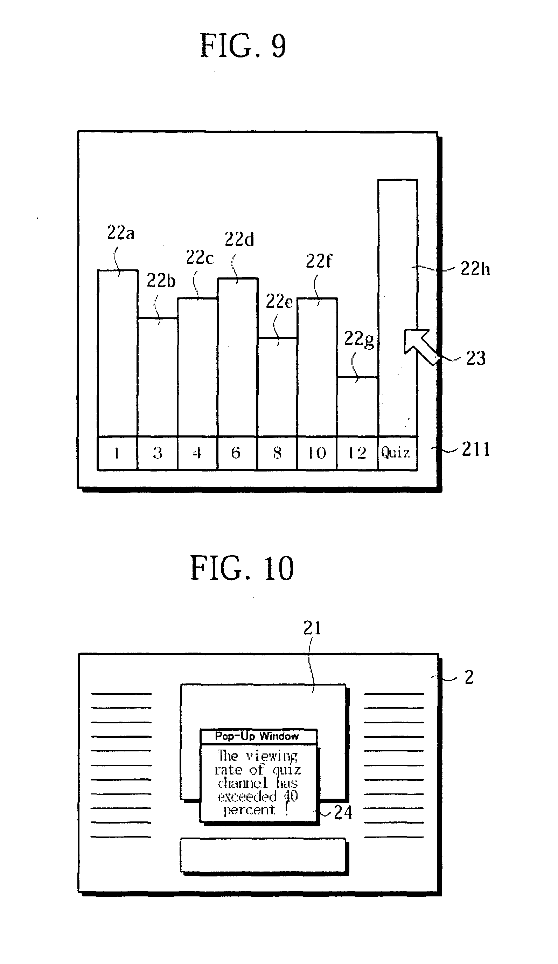

The viewing rate report unit 58 collects the viewing channels of the respective users acquired by the channel determination unit 53, calculates the viewing rate of each channel at the present time, generates report content 211 represented by a bar graph of rectangular bars 22a to 22h and so forth as illustrated in Fig. 9, and transmits the content 211 to the content distributing unit 54. The content distributing unit 54 distributes the report content to the respective terminal devices 1.

Viewing this report content may be made possible at the respective terminal devices, for example, by broadcasting the report content in time slots other than the time slot of the above described unused channels for the CM time length network program, providing a dedicated channel for viewing rate report, or opening a particular pop-up interface 24 in the screen as illustrated in Fig. 10. In addition, the report of viewing rates may be displayed together with the rate of change in the viewing rate. By this configuration, it is possible to inform the user of quick increase in the viewing rate, and the user can surely view an interest momentary scene.

Meanwhile, as shown in Fig. 9, the report content 211 in accordance with the present embodiment includes the bar graph of rectangular bars 22a to 22h corresponding to the respective channel numbers, and an arbitrary channel can be selected by clicking the rectangular bar corresponding to this arbitrary channel with a pointing device 23 such as a mouse. The manipulation with this pointing device 23 is input to the above manipulation signal receiving unit 132 as a manipulation signal, and thereby the channel can be switched to the selected channel.

The method for viewing the viewing rate report program is performed by the following steps. Fig. 8 is a flow chart for showing the procedure of the method of viewing the viewing rate report program in accordance with the present embodiment. Meanwhile, the steps to be performed in advance of the viewing channel report (step S401) as shown in the same figure are equivalent to steps S301 to S305 as described above.

The channel currently viewed at each terminal device is reported to the content server 5 by the viewing channel report unit 134 in step S401, the content server 5 identifies the user by means of the user identifying unit 52 in step S402, and the channel determination unit 53 determines the channel number currently viewed by the user in step S403. Next, the viewing rate report unit 58 calculates the current viewing rate in step S404 and generates the report content 211, which is transmitted to the respective terminals through the content distributing unit 54 and output at the user terminals for viewing it in step S405.

The viewing rate of each channel is represented with a vertical bar at the user terminal on the basis of the report content 211, and thereby it is possible to know the channel having the highest viewing rate at the present time, and easily switch the channel to the channel desired to view only by clicking the vertical bar corresponding to the desired channel.

Meanwhile, the viewing rates as described above may be associated with the respective users and accumulated in the user database, and the data may be used for marketing and the like. For example, the attributes (age, gender, occupation, address and the like) of each user are associated with the viewing tendency of the user, so that it is researched what types of users view what types of programs. Incidentally, user's consent is preferably obtained in advance of starting the collection of the viewing tendency. In this case, it is desirable to provide incentives to cooperation in the collection of the viewing tendency, for example, by delivering special content to the users who cooperated in the collection.

Furthermore, as the data of the viewing tendency, it is possible to use the attributes of content (genres, performers and the like) as keywords which are weighted in accordance with the viewing time of content. In this case, the viewing time of particular content is added up for each keyword associated with the content, such that the keyword is weighted in accordance with the added viewing time. According to this scheme, it is possible to easily evaluate the viewing tendency of the user on the basis of the length of times. Incidentally, it is possible to charge advertisement rates to the advertising clients related to the keywords in proportion to the length of times added with respect to the respective keywords, and it is also possible to calculate the compensations payable to the content creators. In addition, it is possible to offer cash back for the user in proportion to the length of times as added.

### [Third Embodiment]

Next, the third embodiment of the present invention will be explained. The present embodiment is characterized in that the system configuration in accordance with the first or second embodiment as described above is provided further with the functionality of evaluating content.

### (Configuration Of Television Broadcast Viewing System)

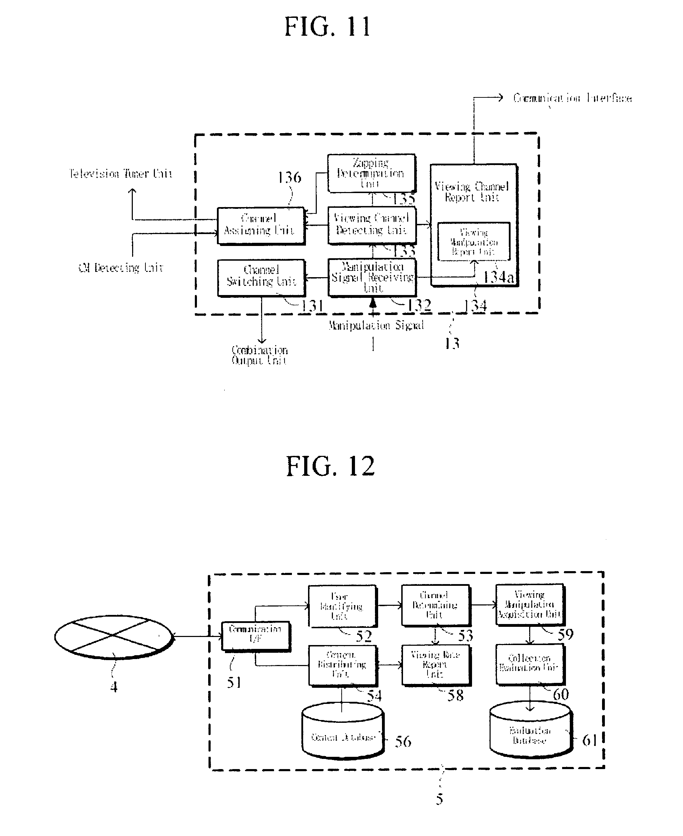

Fig. 11 and Fig. 12 are block diagrams for showing the configuration of the channel management unit 13 of the terminal device 1 and the configuration of the content server 5 in accordance with the present embodiment.

In the case of the present embodiment, the terminal device 1 in accordance with the first or second embodiment as described above is provided with a viewing manipulation report unit 134a in the viewing channel report unit 134 of the channel management unit 13 as shown in the same figure. Then, the manipulation signal receiving unit 132 in accordance with the present embodiment transmits the manipulation signal as received from a remote control and other manipulation devices to the viewing channel detecting unit 133 and also to the viewing manipulation report unit 134a.

In the case of the present embodiment, the viewing manipulation report unit 134a is a module for adding the manipulation of the remote control or usual operation as viewing manipulation information to a network content delivery request to be transmitted to the content server 5 from the viewing channel detecting unit 133 through the viewing channel report unit 134. This viewing manipulation corresponds to channel switching, playback, stop, fast-forward, rewinding and the like operation for changing the playback direction and playback speed of network content.

On the other hand, the content server 5 is provided with a viewing manipulation acquisition unit 59 for acquiring viewing manipulation information included in delivery requests which are transmitted from the terminal device 1 through the IP network 4, an collection evaluation unit 60 for counting viewing manipulation of the respective terminal devices 1 and evaluating the values of network content, and an evaluation database 61 for accumulating the evaluation results which are prepared by the collection evaluation unit 60.

The viewing manipulation acquisition unit 59 extracts viewing manipulation information included in the delivery request which is received by the channel determination unit 53, and outputs the viewing manipulation information to the collection evaluation unit 60. The collection evaluation unit 60 evaluates the value of the respective piece of content with reference to the distribution of the points of changing the playback direction and playback speed of network content, i.e., corresponding to starting, stopping, fast-forwarding, rewinding and the like operation of the playback by each user.
The evaluation results obtained by this collection evaluation unit 60 are accumulated in the evaluation database 61 in association with the users for each content.

### (Content Evaluation Method)

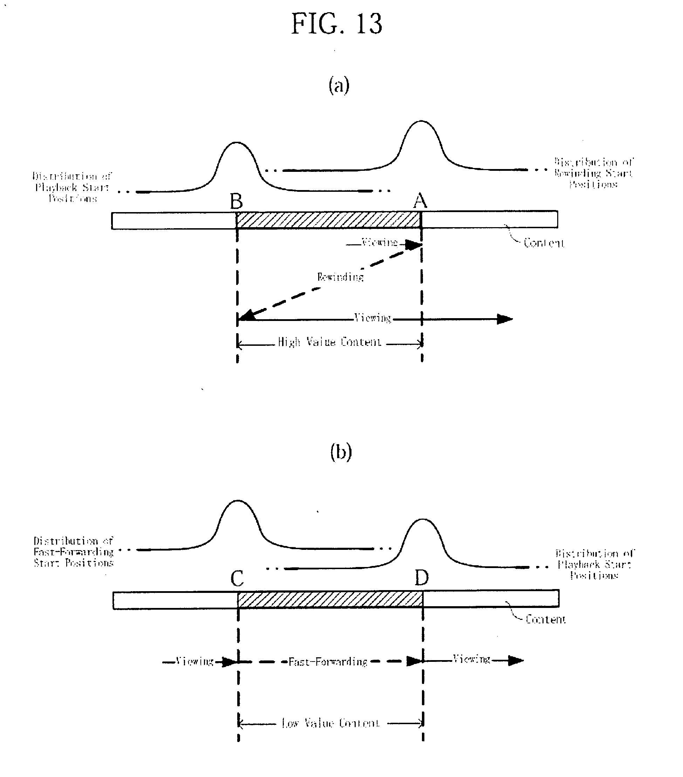

The above value evaluating method is shown in Fig. 13. First, as shown in (a), the distribution of the start position of rewinding and the start position of playback is obtained for each user. More specifically speaking, when there is a valuable scene during viewing content (a nice play of sports broadcasted live, a climactic scene in a drama, and so forth), the user who wants to view again tends to start rewinding at the end position of the scene (change point A) and start playback at the start position of the scene (change point B). The scene (indicative of hatched portion) between the rewinding start position and the playback start position is evaluated as a valuable scene. In this case, since the change points on the basis of the viewing manipulation are distributed with a certain time dispersion when a number of users are taken into consideration, the extent of the valuable content is determined by calculating the dispersion with a margin (for example, 5 minutes) from the center of the dispersion.

On the other hand, as shown in (b), the distribution of the start position of fast-forwarding and the start position of playback is obtained for each user. More specifically speaking, when there is a less valuable scene during viewing content (for example, a CM), the user who wants to skip this scene tends to start fast-forwarding at the start position of the scene (change point C) and start playback at the end position of the scene (change point D). The scene (indicative of hatched portion) between the fast-forwarding start position and the playback start position is evaluated as a less valuable scene.

### (Modification Example)

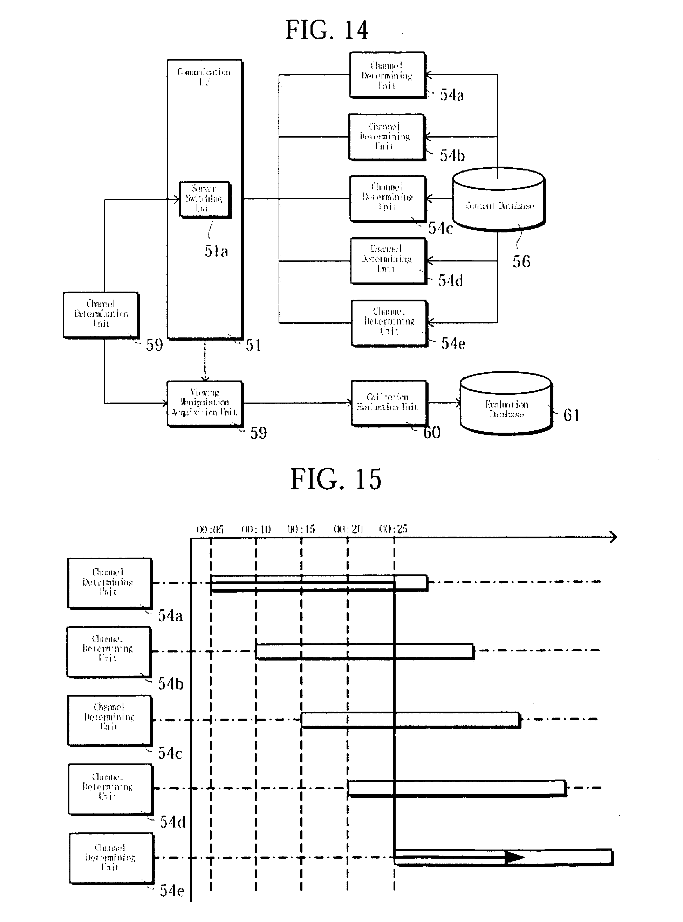

Meanwhile, the system as shown in Fig. 14 may be used as a system for performing fast-forwarding, rewinding, starting, stopping the playback in response to the viewing manipulation by the user.

Namely, as shown in Fig. 14 and Fig. 15, content distributing units 54a ~ e are provided for distributing a plurality of copies of the same content with time differences, and the terminal device 1 of the user is selectively connected to one of the content distributing units by a server switching unit 51a provided in the communication interface 51.

The server switching unit 51a determines the position of starting playback of the content designated by a delivery request in response to the viewing manipulation as input from the channel determination unit 53, selects the content distributing unit which can play back the content from the position as determined, and connects this content distributing unit with the terminal device 1. For example, as shown in Fig. 15, rewinding of 20 seconds can instantaneously be done only by switching the connection from the content distributing unit 54a to the content distributing unit 54e, in the case where a user viewing content distributed from the content distributing unit 54a wants to perform rewinding of 20 seconds from the current position of 00:25 and view the content again from the position of 00:05.

Meanwhile, the selection of this content distributing unit is made, for example, to select the content distributing unit that is playing back the content only with a very small time difference which can be absorbed by a buffer memory, or conversely to select the content distributing unit that has sufficient available resources in the case where a number of delivery requests are concentrated approximately at the same time.

Then, the history of switching manipulation performed by the server switching unit 51a is input to the viewing manipulation acquisition unit 59 together with viewing manipulation information from the channel determination unit 53, and processed by the aggregation calculation performed by the collection evaluation unit 60.

### (Actions/Effects)

As has been discussed above, the terminal device 1 reports the user manipulation as viewing manipulation information to the content server 5, which then collects the points of changing the playback direction and playback speed of network content in response to viewing manipulation and calculates the distribution thereof, and thereby it is possible to realize detailed content evaluation in which, for example, the portion repeatedly viewed by rewinding is evaluated as a high value portion while the portion insufficiently viewed by fast-forwarding is evaluated as a low value portion.

In addition, while the CM time length network program is assigned during the time that the CM is detected in the case of the embodiments 1 and 2 as described above, it is possible to assign a portion of content which is evaluated as highly valued by the collection evaluation unit 60 as explained in the present embodiment. Furthermore, it is possible to use, as CM detection means, the functionality provided in the collection evaluation unit 60 for evaluating a low value content.

### Industrial Applicability

In accordance with the system of the present invention, when viewing and listening video and sound by a terminal device provided with a display unit, it is possible to view meaningful information which can be viewed during a CM time slot and reduce the channel switching frequency during zapping by distributing a program linked with the CM broadcast of a program which is being viewed.

## Claims

1. A television broadcast viewing system for viewing and listening video and sound by a terminal device provided with a display unit, comprising:
a television tuner unit operable to receive broadcast content which is broadcasted through radio waves;
a network content acquisition unit operable to acquire network content which is distributed through an IP network;
a CM detection unit operable to detect a CM portion in said broadcast content which is being viewed;
a channel management unit operable to assign said network content to a television channel, to which no television broadcast frequency is assigned, during the time that a CM is detected by said CM detection unit;
a combination output unit operable to output on said display unit said broadcast content or network content assigned to the television channel which is selected.

2. The television broadcast viewing system as claimed in claim 1 wherein said channel management unit assigns said network content to a television channel adjacent to the television channel on which a CM is detected.

3. The television broadcast viewing system as claimed in claim 1 further comprising a zapping determination unit operable to measure the time of viewing a channel and determines zapping viewing when the time of viewing is shorter than a predetermined time length,
wherein said CM detection unit detects a CM on the television channel when zapping viewing is not determined, and
wherein said channel management unit assigns said network content in correspondence with a CM broadcasting time slot of the current channel.

4. A television broadcast viewing system for viewing and listening video and sound by a terminal device provided with a display unit, comprising:
a network content acquisition unit operable to acquire network content which is distributed in response to a request through an IP network;
a combination output unit operable to output said network content on said display unit;
a viewing manipulation acquisition unit operable to acquire user's viewing manipulation information of said network content through said IP network, said viewing manipulation information being contained in said request; and
a collection evaluation unit operable to collect said viewing manipulation information from a plurality of said terminal devices and evaluate the values of said network content.

5. The television broadcast viewing system as claimed in claim 4 wherein said viewing manipulation acquisition unit acquires the points of changing the playback direction and playback speed of said network content, for example, corresponding to starting, stopping, fast-forwarding, rewinding and the like operation of the playback of said network content, as said viewing manipulation information, and
wherein said collection evaluation unit operable to calculate the distribution of said changing points and perform said value evaluation.

6. A television broadcast viewing method for viewing and listening video and sound by a terminal device provided with a display unit, comprising:
a step (1) of receiving broadcast content which is broadcasted through radio waves, and acquiring network content which is distributed through an IP network;
a step (2) of detecting a CM portion in said broadcast content which is being viewed;
a step (3) of assigning said network content to a television channel, to which no television broadcast frequency is assigned, during the time that a CM is detected, and outputting on said display unit said broadcast content or network content assigned to the television channel which is selected.

7. The television broadcast viewing method as claimed in claim 6 wherein, in said step (3), said network content is assigned to a television channel adjacent to the television channel on which a CM is detected.

8. The television broadcast viewing method as claimed in claim 6 wherein, in said step (2), while the time of viewing a channel is measured, zapping viewing is determined when the time of viewing is shorter than a predetermined time length, and a CM is detected on the television channel when zapping viewing is not determined, and
wherein, in said step (3), said network content is assigned in correspondence with a CM broadcasting time slot of the current channel.

9. A television broadcast viewing method for viewing and listening video and sound by a terminal device provided with a display unit, comprising:
a step (1) of sending a request for the network content through the IP network, acquiring network content which is distributed in response to said request, outputting said network content on said display unit, and acquiring user's viewing manipulation information of said network content through a viewing manipulation acquisition unit;
a step (2) of collecting said viewing manipulation information from a plurality of said terminal devices by a collection evaluation unit and evaluating the values of said network content by said collection evaluation unit.

10. The television broadcast viewing method as claimed in claim 9 wherein, in said step (1), said viewing manipulation acquisition unit acquires the points of changing the playback direction and playback speed of said network content, for example, corresponding to starting, stopping, fast-forwarding, rewinding and the like operation of the playback of said network content, as said viewing manipulation information, and
wherein, in said step (2), said collection evaluation unit calculates the distribution of said changing points and perform said value evaluation.
